# EUROPEAN PATENT APPLICATION

(11) **EP 3 378 835 A1**
(43) Date of publication of application: **26.09.2018**
(21) Application number: 18162064.2
(22) Date of filing: 15.03.2018
(51) Int. Cl.: C01G 53/00, H01M 4/525

(54) **METHOD FOR PREPARING PRECURSOR OF NICKEL-COBALT-ALUMINUM TERNARY CATHODE MATERIAL, CATHODE PLATE, AND LITHIUM ION BATTERY**

(30) Priority: 20.03.2017 CN 201710166644
(71) Applicant: Optimum Battery Co., Ltd., Shenzhen City, Guangdong 518118 (CN)
(72) Inventor: TANG, Chao, Shenzhen, Guangdong 518118 (CN); RAO, Mu min, Shenzhen, Guangdong 518118 (CN); RONG, Liang bin, Shenzhen, Guangdong 518118 (CN); DENG, Chang yuan, Shenzhen, Guangdong 518118 (CN)
(74) Representative: Greaves Brewster LLP

(57) **Abstract**

The present application provides a method for preparing precursor of nickel-cobalt-aluminum ternary cathode material, comprising steps of: 1) mixing a nickel salt solution, a cobalt salt solution, and an aluminum salt solution at a molar ratio of Ni:Co:Al=(0.6-0.9):(0.05-0.3):(0.01-0.1) to obtain a first mixture; 2) adding the first mixture into ammonia water, stirring, and adjusting pH by an alkaline solution to obtain a second mixture with a pH≥12; 3) adding an appropriate amount of additive to the second mixture, stirring, and ageing for 10-24h to obtain a colloid; 4) washing the colloid and concentrating by centrifugation to obtain a gel; 5) drying the gel at 200-300°C for 4-8h, and sintering at 1100-1600 °C for 3-6h to obtain a precursor of nickel-cobalt-aluminum ternary cathode material. The present application also provides a cathode plate and a lithium ion battery including the same.

## Description

### BACKGROUND OF THE INVENTION

### Field of the Invention

The present application generally relates to lithium ion batteries and, more particularly, to a method for preparing precursor of nickel-cobalt-aluminum ternary cathode material, a cathode plate, and a lithium ion battery.

### Description of the Related Art

Lithium ion batteries have been widely used as energy storage systems in 3C digital, electric vehicle and other fields because of their advantages of high energy density, high voltage, long service life and environment friendly. To meet the growing market demand, energy density of lithium ion battery is required to be higher and higher. Cathode material is one of key factors that restrict the energy density of lithium ion battery.

At present, ternary cathode materials with high capacity, good performances at low temperature and high rate conditions have gained market attention, especially nickel-cobalt-aluminum ternary cathode material, which may greatly improve the capacity, mass energy density and volume energy density of lithium ion battery. Physical and electrochemical properties of ternary cathode materials are related to their precursors, therefore, improving the quality of the precursor is conductive to improving performances of the ternary cathode material, such as cycle performance and charge and discharge performance.

In the prior art, precursors of nickel-cobalt-aluminum ternary cathode materials are usually prepared by controlling crystallization method. However, this method could not guarantee the mixing uniformity of nickel, cobalt and aluminum, and the prepared precursors are not stable in performance. In view of the foregoing, what is needed, therefore, is to provide a method for preparing precursor of nickel-cobalt-aluminum ternary cathode material, a cathode plate, and a lithium ion battery to overcome the defects as mentioned above.

### SUMMARY OF THE INVENTION

One object of the present application is to provide a method for preparing precursor of nickel-cobalt-aluminum ternary cathode material, which could effectively prepare a precursor of nickel-cobalt-aluminum ternary cathode material with good performance and stability.

According to one embodiment of the present application, a method for preparing precursor of nickel-cobalt-aluminum ternary cathode material comprising steps of:
1) mixing a nickel salt solution, a cobalt salt solution, and an aluminum salt solution at a molar ratio of Ni:Co:Al=(0.6-0.9):(0.05-0.3):(0.01-0.1) to obtain a first mixture;
2) adding the first mixture into ammonia water, stirring, and adjusting pH by an alkaline solution to obtain a second mixture with a pH≥12;
3) adding an appropriate amount of additive to the second mixture, stirring, and ageing for 10-24h to obtain a colloid;
4) washing the colloid and concentrating by centrifugation to obtain a gel;
5) drying the gel at 200-300°C for 4-8h, and sintering at 1100-1600°C for 3-6h to obtain a precursor of nickel-cobalt-aluminum ternary cathode material.

According to one aspect of the present application, in step 1), the nickel salt is soluble nickel salt; the cobalt salt is soluble cobalt salt; and the aluminum salt is soluble aluminum salt.

According to one aspect of the present application, in step 1), the nickel salt is selected from a group consisting of nickel sulfate, nickel chloride, nickel nitrate, basic nickel carbonate, nickel acetate, and combinations thereof.

According to one aspect of the present application, in step 1), the cobalt salt is selected from a group consisting of cobalt sulfate, cobalt nitrate, cobalt chloride, cobalt oxalate, and combinations thereof.

According to one aspect of the present application, in step 1), the aluminum salt is selected from a group consisting of aluminum nitrate, aluminum sulfate, aluminum chloride, and combinations thereof.

According to one aspect of the present application, in step 2), the ammonia water has a mass fraction of 5-25%.

According to one aspect of the present application, in step 2), the alkaline solution is sodium hydroxide solution or sodium carbonate solution or ammonium bicarbonate solution.

According to one aspect of the present application, in step 3), the additive is selected from a group consisting of ammonium fluoride, urea, thiourea, and combinations thereof.

According to one aspect of the present application, in step 3), the additive is added in an amount of 0.01-0.05% with respect to the mass of the second mixture.

According to one aspect of the present application, in step 2) and step 3), stirring speeds are both greater than 4000r/min.

According to one aspect of the present application, in step 4), the colloid is washed by distilled water and then alcoholic liquid.

According to one aspect of the present application, in step 4), the alcoholic liquid is selected from a group consisting of ethanol, n-butanol, n-propanol, ethylene glycol, isobutanol, and combinations thereof.

The method for preparing precursor of nickel-cobalt-aluminum ternary cathode material provided according to the present application adopts reverse precipitation method to solve the problem of nonuniform precipitation of Ni²⁺, Co²⁺ and Al³⁺. In addition, particle size of crystal is controlled by using the additive so that the prepared precursor could achieve nanoscale without grinding after heating treatment of the gel, so as to effectively guarantee product quality. What's more, the method for preparing precursor of nickel-cobalt-aluminum ternary cathode material provided according to the present application has simple process and is convenient for large-scale industrial production.

One embodiment of the present application provides a cathode plate comprising a cathode current collector and a slurry coated on two opposite surfaces of the cathode current collector; the slurry comprising a conductive agent, a binder, a solvent and a cathode material, wherein the cathode material is made of the precursor of nickel-cobalt-aluminum ternary cathode material prepared according to the present application.

One embodiment of the present application provides a lithium ion battery comprising a shell having an opening at one end, a winding core positioned in the shell, electrolyte received in the shell and immersing the winding core, and a cap cover positioned in the opening for enclosing the opening; wherein the winding core comprising the cathode plate provided according to the present application, an anode plate and a separator settled between the cathode plate and the anode plate.

Compared with the prior art, the lithium ion battery provided according to the present application may have better cycle performance and better charge and discharge performance.

### BRIEF DESCRIPTION OF THE DRAWINGS

FIG. 1 depicts a flow chart of a method for preparing precursor of nickel-cobalt-aluminum ternary cathode material provided according to the present application;
FIG. 2 depicts a schematic view of a cathode plate provided according to the present application;
FIG. 3 depicts a schematic view of a lithium ion battery provided according to the present application;
FIG. 4 depicts SEM image of a precursor prepared according to Example 1 of the present application; and
FIG. 5 depicts SEM image of a precursor prepared according to Example 2 of the present application.

### DETAILED DESCRIPTION OF THE PREFERRED EMBODIMENTS

In order that the objects, technical solution and technical effects of the present application could be understood more clearly, the present application will be described in more detail with reference to the accompanying drawings and examples. It should be understood that the specific examples described herein are illustrative only and are not intended to limit the present application.

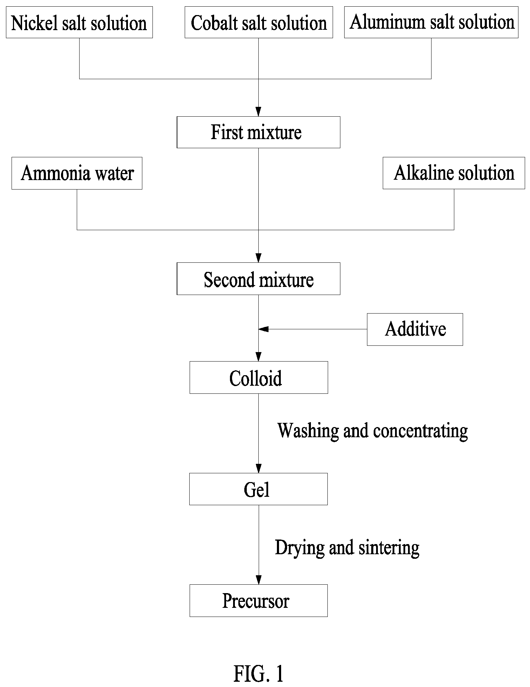

Referring to FIG. 1, one embodiment of the present application provides a method for preparing precursor of nickel-cobalt-aluminum ternary cathode material comprising steps of:
1) mixing a nickel salt solution, a cobalt salt solution, and an aluminum salt solution at a molar ratio of Ni:Co:Al=(0.6-0.9):(0.05-0.3):(0.01-0.1) to obtain a first mixture;
2) adding the first mixture into ammonia water, stirring, and adjusting pH by an alkaline solution to obtain a second mixture with a pH≥12;
3) adding an appropriate amount of additive to the second mixture, stirring, and ageing for 10-24h to obtain a colloid;
4) washing the colloid and concentrating by centrifugation to obtain a gel;
5) drying the gel at 200-300°C for 4-8h, and sintering at 1100-1600°C for 3-6h to obtain a precursor of nickel-cobalt-aluminum ternary cathode material.

Specifically, in step 1), the nickel salt is soluble nickel salt; the cobalt salt is soluble cobalt salt; and the aluminum salt is soluble aluminum salt. More specifically, in step 1), the nickel salt is selected from a group consisting of nickel sulfate, nickel chloride, nickel nitrate, basic nickel carbonate, nickel acetate, and combinations thereof; the cobalt salt is selected from a group consisting of cobalt sulfate, cobalt nitrate, cobalt chloride, cobalt oxalate, and combinations thereof; the aluminum salt is selected from a group consisting of aluminum nitrate, aluminum sulfate, aluminum chloride, and combinations thereof.

Specifically, in step 2), the ammonia water has a mass fraction of 5-25%; the alkaline solution is sodium hydroxide solution or sodium carbonate solution or ammonium bicarbonate solution.

Specifically, in step 3), the additive is added in an amount of 0.01-0.05% with respect to the mass of the second mixture, and the additive is selected from a group consisting of ammonium fluoride, urea, thiourea, and combinations thereof.

Specifically, in step 2) and step 3), stirring speeds are both greater than 4000r/min.

Specifically, in step 4), the colloid is washed by distilled water and then alcoholic liquid, and the alcoholic liquid is selected from a group consisting of ethanol, n-butanol, n-propanol, ethylene glycol, isobutanol, and combinations thereof.

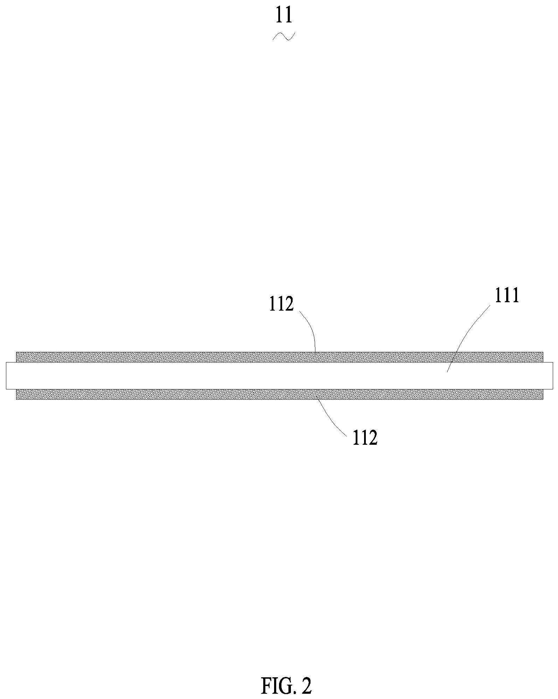

Referring to FIG. 2, one embodiment of the present application provides a cathode plate 11 comprising a cathode current collector 111 and a slurry 112 coated on two opposite surfaces of the cathode current collector 111; the slurry 112 comprising a conductive agent, a binder, a solvent and a cathode material, wherein the cathode material is made of the precursor of nickel-cobalt-aluminum ternary cathode material prepared according to the present application.

Specifically, the cathode current collector 111 may be an aluminum foil.

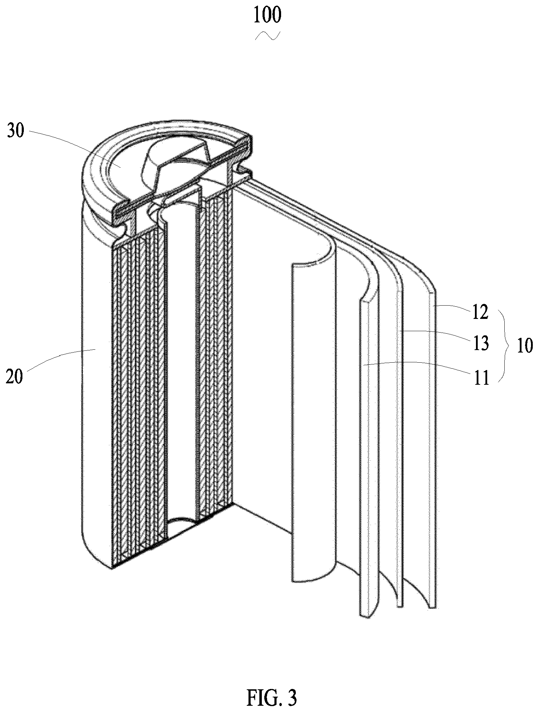

Referring to FIG. 3, one embodiment of the present application provides a lithium ion battery 100 comprising a shell 20 having an opening at one end, a winding core 10 positioned in the shell 20, electrolyte received in the shell 20 and immersing the winding core 10, and a cap cover 30 positioned in the opening for enclosing the opening; wherein the winding core 10 comprising the cathode plate 11 provided according to the present application, an anode plate 12 and a separator 13 positioned between the cathode plate 11 and the anode plate 12.

Compared with the prior art, the lithium ion battery provided according to the present application may have better cycle performance and better charge and discharge performance.

### Example 1:

1. mixing a nickel salt solution with a concentration of 0.9mol/L, a cobalt salt solution with a concentration of 0.3mol/L and an aluminum salt solution with a concentration of 0.1mol/L at a volume ratio of 1:1:1 to obtain a first mixture;
2. adding the first mixture into ammonia water having a mass fraction of 25%, stirring at a speed of 4500r/min, and adjusting pH by sodium hydroxide solution to obtain a second mixture with a pH=12;
3. adding some ammonium fluoride to the second mixture wherein the ammonium fluoride is added in an amount of 0.05% with respect to the mass of the second mixture , stirring at a speed of 4500r/min, and ageing for 24h to obtain a colloid;
4. washing the colloid by distilled water and then ethanol, and concentrating by centrifugation to obtain a gel;
5. drying the gel at 300°C for 8h, and sintering at 1600°C for 6h to obtain a precursor of nickel-cobalt-aluminum ternary cathode material.

### Example 2:

1. mixing a nickel salt solution with a concentration of 0.6mol/L, a cobalt salt solution with a concentration of 0.05mol/L and an aluminum salt solution with a concentration of 0.01mol/L at a volume ratio of 1:1:1 to obtain a first mixture;
2. adding the first mixture into ammonia water having a mass fraction of 5%, stirring at a speed of 4500r/min, and adjusting pH by sodium hydroxide solution to obtain a second mixture with a pH=12;
3. adding some ammonium fluoride to the second mixture wherein the ammonium fluoride is added in an amount of 0.01% with respect to the mass of the second mixture , stirring at a speed of 4500r/min, and ageing for 10h to obtain a colloid;
4. washing the colloid by distilled water and then ethanol, and concentrating by centrifugation to obtain a gel;
5. drying the gel at 200°C for 4h, and sintering at 1100°C for 3h to obtain a precursor of nickel-cobalt-aluminum ternary cathode material.

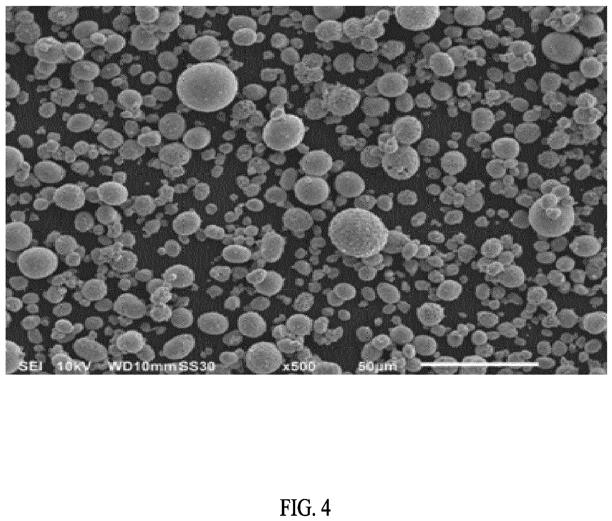

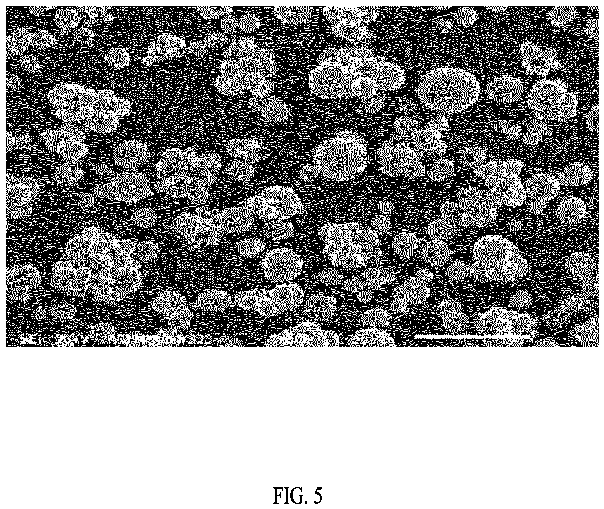

Precursors of nickel-cobalt-aluminum ternary cathode material prepared according to Example 1 and Example 2 were observed by scanning electron microscope. The SEM image of the precursor prepared by Example 1 is shown in FIG. 4 and the SEM image of the precursor prepared by Example 2 is shown in FIG. 5.

The method for preparing precursor of nickel-cobalt-aluminum ternary cathode material provided according to the present application adopts reverse precipitation method to solve the problem of nonuniform precipitation of Ni²⁺, Co²⁺ and Al³⁺. In addition, particle size of crystal is controlled by using the additive so that the prepared precursor could achieve nanoscale without grinding after heating treatment of the gel, so as to effectively guarantee product quality. What's more, the method for preparing precursor of nickel-cobalt-aluminum ternary cathode material provided according to the present application has simple process and is convenient for large-scale industrial production.

It should be understood that the above examples are only used to illustrate the technical concept and feature of the present application, and the purpose to thereof is familiarize the person skilled in the art to understand the content of the present application and carry it out, which cannot restrict the protection scope of the present invention based on above. Any equivalent transformation or modification made in the spirit of the present invention should all be included within the protection scope of the present application.

## Claims

1. A method for preparing precursor of nickel-cobalt-aluminum ternary cathode material, comprising steps of:
1) mixing a nickel salt solution, a cobalt salt solution, and an aluminum salt solution at a molar ratio of Ni:Co:Al=(0.6-0.9):(0.05-0.3):(0.01-0.1) to obtain a first mixture;
2) adding the first mixture into ammonia water, stirring, and adjusting pH by an alkaline solution to obtain a second mixture with a pH≥12;
3) adding an appropriate amount of additive to the second mixture, stirring, and ageing for 10-24h to obtain a colloid;
4) washing the colloid and concentrating by centrifugation to obtain a gel;
5) drying the gel at 200-300°C for 4-8h, and sintering at 1100-1600 °C for 3-6h to obtain a precursor of nickel-cobalt-aluminum ternary cathode material.

2. The method for preparing precursor of nickel-cobalt-aluminum ternary cathode material according to claim 1, wherein the nickel salt is soluble nickel salt; the cobalt salt is soluble cobalt salt; and the aluminum salt is soluble aluminum salt.

3. The method for preparing precursor of nickel-cobalt-aluminum ternary cathode material according to claim 2, wherein the nickel salt is selected from a group consisting of nickel sulfate, nickel chloride, nickel nitrate, basic nickel carbonate, nickel acetate, and combinations thereof.

4. The method for preparing precursor of nickel-cobalt-aluminum ternary cathode material according to claim 2, wherein the cobalt salt is selected from a group consisting of cobalt sulfate, cobalt nitrate, cobalt chloride, cobalt oxalate, and combinations thereof.

5. The method for preparing precursor of nickel-cobalt-aluminum ternary cathode material according to claim 2, wherein the aluminum salt is selected from a group consisting of aluminum nitrate, aluminum sulfate, aluminum chloride, and combinations thereof.

6. The method for preparing precursor of nickel-cobalt-aluminum ternary cathode material according to claim 1, wherein the ammonia water of step 2) has a mass fraction of 5-25%.

7. The method for preparing precursor of nickel-cobalt-aluminum ternary cathode material according to claim 1, wherein the alkaline solution of step 2) is sodium hydroxide solution or sodium carbonate solution or ammonium bicarbonate solution.

8. The method for preparing precursor of nickel-cobalt-aluminum ternary cathode material according to claim 1, wherein the additive of step 3) is selected from a group consisting of ammonium fluoride, urea, thiourea, and combinations thereof.

9. The method for preparing precursor of nickel-cobalt-aluminum ternary cathode material according to claim 8, wherein the additive is added in an amount of 0.01-0.05% with respect to the mass of the second mixture.

10. The method for preparing precursor of nickel-cobalt-aluminum ternary cathode material according to claim 1, wherein stirring speeds of step 2) and step 3) are both greater than 4000r/min.

11. The method for preparing precursor of nickel-cobalt-aluminum ternary cathode material according to claim 1, wherein the colloid of step 4) is washed by distilled water and then alcoholic liquid.

12. The method for preparing precursor of nickel-cobalt-aluminum ternary cathode material according to claim 11, wherein the alcoholic liquid is selected from a group consisting of ethanol, n-butanol, n-propanol, ethylene glycol, isobutanol, and combinations thereof.

13. A cathode plate (11), comprising a cathode current collector (111) and a slurry (112) coated on two opposite surfaces of the cathode current collector (111); the slurry (112) comprising a conductive agent, a binder, a solvent and a cathode material, wherein the cathode material is made of the precursor prepared according to claim 1.

14. A lithium ion battery (100), comprising a shell (20) having an opening at one end, a winding core (10) positioned in the shell (20), electrolyte received in the shell (20) and immersing the winding core (10), and a cap cover (30) positioned in the opening for enclosing the opening; wherein the winding core (10) comprising the cathode plate (11) provided according to claim 13, an anode plate (12) and a separator (13) settled between the cathode plate (11) and the anode plate (12).
